Europäisches Patentamt

(19) European Patent Office

Office européen des brevets

(11) **EP 0 740 577 B1**

(12) **FASCICULE DE BREVET EUROPEEN**

(45) Date de publication et mention
de la délivrance du brevet:
**26.11.1997 Bulletin 1997/48**

(51) Int. Cl.⁶: **B01D 53/68**, B01D 53/50,
B01J 20/04

(21) Numéro de dépôt: **95906934.5**

(22) Date de dépôt: **12.01.1995**

(86) Numéro de dépôt international:
**PCT/EP95/00116**

(87) Numéro de publication internationale:
**WO 95/19835 (27.07.1995 Gazette 1995/32)**

(54) **COMPOSITION REACTIVE ET PROCEDE POUR L'EPURATION D'UN GAZ CONTENANT DU CHLORURE D'HYDROGENE**

REAKTIVE ZUSAMMENSETZUNG UND VERFAHREN ZUR REINIGUNG VON EINEM CHLORWASSERSTOFF ENTHALTENDEN GAS

REACTIVE COMPOSITION AND METHOD FOR PURIFYING A HYDROGEN CHLORIDE-CONTAINING GAS

(84) Etats contractants désignés:
**AT BE CH DE DK ES FR GB GR IE IT LI LU MC NL PT SE**

(30) Priorité: **20.01.1994 IT MI940078**

(43) Date de publication de la demande:
**06.11.1996 Bulletin 1996/45**

(73) Titulaire:
**SOLVAY (Société Anonyme)**
**B-1050 Bruxelles (BE)**

(72) Inventeur: **FAGIOLINI, Nilo**
**I-57013 Rosignano-Solway (IT)**

(74) Mandataire: **Anthoine, Paul et al**
**SOLVAY**
**Département de la Propriété Industrielle**
**310, rue de Ransbeek**
**1120 Bruxelles (BE)**

(56) Documents cités:
**EP-A- 0 161 497        EP-A- 0 301 272**
**EP-A- 0 463 367        WO-A-86/05714**
**WO-A-88/00672        WO-A-93/04983**
**US-A- 3 589 863        US-A- 4 555 391**
**US-A- 4 588 569        US-A- 4 960 445**

- **SOLVAY & Cie, brochure Tr.895/5c-B-1290**
- **Brochure SOLVAY Br 1352a-B-0,4-0189**
- **Brochure SOLVAY Tr-927c-B-1-0889**
- **Ullmann's Encyclopedia of Industrial Chemistry, Volume A24,1993,page 316**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne l'épuration des gaz contenant du chlorure d'hydrogène.

Elle concerne plus particulièrement une composition réactive à base de bicarbonate de sodium, utilisable pour épurer un gaz en chlorure d'hydrogène.

L'incinération est une technologie qui tend à s'imposer pour l'élimination des ordures ménagères ou municipales. L'incinération des ordures ménagères s'accompagne d'une formation de fumée contenant généralement du chlorure d'hydrogène. Il est impératif d'éliminer le chlorure d'hydrogène de la fumée, avant de rejeter celle-ci dans l'atmosphère.

Un procédé connu pour épurer une fumée contenant du chlorure d'hydrogène consiste à traiter la fumée avec du bicarbonate de sodium de manière à décomposer le chlorure d'hydrogène et former du chlorure de sodium.

On a plus particulièrement proposé un procédé dans lequel du bicarbonate de sodium est injecté à l'état d'une poudre dans la fumée sortant de l'incinérateur et la fumée ainsi traitée est ensuite envoyée sur un filtre (SOLVAY & Cie, brochure TR. 895/5c-B-1-1290). Dans ce procédé connu, la fumée possède une température de 260 °C à l'endroit d'injection du bicarbonate de sodium. Celui-ci est mis en oeuvre à l'état d'une poudre calibrée, obtenue par broyage, dont 90 % en poids est à l'état de particules de diamètre inférieur à 16 μm.

En pratique, la poudre de bicarbonate de sodium mise en oeuvre dans ce procédé connu contient du monocarbonate de sodium.

On a maintenant trouvé qu'il était possible d'optimiser l'efficacité du procédé connu qui vient d'être décrit, en sélectionnant du bicarbonate de sodium de qualité bien définie.

L'invention concerne dès lors une composition réactive, solide, pulvérulente pour l'épuration d'un gaz contenant du chlorure d'hydrogène, ladite composition réactive comprenant au moins 99% en poids de bicarbonate de sodium et au maximum 1% en poids de monocarbonate de sodium et présentant une distribution granulométrique définie par un diamètre moyen de particule de 0,010 à 0,030 mm et une pente granulométrique de 1 à 3.

Dans la composition réactive selon l'invention, le bicarbonate de sodium et le monocarbonate de sodium sont considérés à l'état anhydre.

Selon l'invention, la composition réactive peut éventuellement comprendre d'autres impuretés accompagnant habituellement le bicarbonate de sodium du commerce, notamment du chlorure de sodium.

La composition réactive selon l'invention est un solide pulvérulent. Un caractéristique importante de la composition réactive selon l'invention réside dans sa distribution granulométrique qui est caractérisée par un diamètre moyen de particule $D_m$ de 0,010 à 0,030 mm et une pente granulométrique $\sigma$ de 1 à 3.

Dans la composition réactive selon l'invention, le diamètre moyen $D_m$ et la pente granulométrique a sont définis par les relations suivantes

$$D_m = \frac{\Sigma\, n_i . D_i}{\Sigma\, n_i} ,$$

$$\sigma = \frac{D_{90} - D_{10}}{D_{50}}$$

dans lesquelles $n_i$ désigne la fréquence (en poids) des particules de diamètre $D_i$, et $D_{90}$ (respectivement $D_{50}$ et $D_{10}$) représente le diamètre pour lequel 90 % (respectivement 50 % et 10 %) des particules de la composition réactive (exprimées en poids) ont un diamètre inférieur à $D_{90}$ (respectivement $D_{50}$ et $D_{10}$). Ces paramètres granulométriques sont définis par la méthode d'analyse par diffraction de rayons laser utilisant un appareil de mesure SYMPATEC modèle HELOS 12LA fabriqué par SYMPATEC GmbH.

La composition réactive selon l'invention est spécialement destinée à l'épuration des fumées provenant des fours d'incinération des ordures ménagères. Ces fumées contiennent généralement, en plus de chlorure d'hydrogène, du dioxyde de soufre. On a observé que la composition réactive selon l'invention réalise une épuration efficace de ces fumées, à la fois en chlorure d'hydrogène et en dioxyde de soufre.

Dans la composition réactive selon l'invention, le bicarbonate de sodium constitue le composé actif principal. La teneur en carbonate de sodium et la distribution granulométrique constituent par ailleurs deux paramètres interdépendants. D'une part, on a observé que, toutes autres choses égales, une teneur excessive en carbonate de sodium tend à provoquer une agglutination des particules de la composition réactive, réduisant l'efficacité de celle-ci. D'autre part, la distribution granulométrique de la composition réactive doit respecter un compromis, sachant qu'une granulométrie fine va favoriser la réaction avec le chlorure d'hydrogène du gaz traité, tandis qu'une granulométrie grossière va favoriser la séparation ultérieure des produits solides de la réaction. En pratique, des compositions réactives spécialement recommandées sont celles pour lesquelles la teneur pondérale en bicarbonate de sodium est de 99 à 99,9 % et la teneur pondérale en monocarbonate de sodium est de 0,1 à 1 %. Les valeurs optimum des paramètres granulométriques sont liées au moyen utilisé pour séparer les produits solides de la réaction de la composition réactive avec le chlorure d'hydrogène et, le cas échéant, le dioxyde de soufre du gaz traité. Il s'est en effet avéré que ces produits de réaction ont une distribution granulométrique directement liée à celle de la composition réactive.

Une forme de réalisation de la composition réactive selon l'invention, spécialement adaptée au cas particulier où on utilise un filtre électrostatique comme moyen de séparation des produits de réaction précités, est celle pour laquelle le diamètre moyen de particule est de 0,020 à 0,030 mm et la pente granulométrique est de 1,25 à 2,50. Une variante préférée de cette forme de réalisation de l'invention est celle dans laquelle au moins 90 % en poids des particules ont un diamètre égal ou inférieur à 0,055 mm et au maximum 10 % en poids ont un diamètre inférieur à 0,006 mm.

Une autre forme de réalisation de la composition réactive selon l'invention, spécialement adaptée au cas particulier où on utilise un filtre du type à tissus filtrants (par exemple un filtre à manches) comme moyen de séparation mécanique des produits de réaction précités, est celle pour laquelle le diamètre moyen de particule est de 0,010 à 0,020 mm et la pente granulométrique est de 1 à 3. Une variante préférée de cette autre forme de réalisation de l'invention est celle dans laquelle au moins 90 % en poids des particules ont un diamètre égal ou inférieur à 0,035 mm et au maximum 10 % en poids ont un diamètre inférieur à 0,005 mm.

La composition réactive selon l'invention est généralement obtenue par broyage d'une poudre grossière de bicarbonate de sodium du commerce. La composition de la poudre et sa granulométrie jouent un rôle important dans la qualité de la composition réactive selon l'invention.

Selon une forme de réalisation spécialement recommandée de la composition réactive selon l'invention, celle-ci est obtenue par broyage d'une poudre qui comprend au moins 99% en poids de bicarbonate de sodium et au maximum 1 % en poids de monocarbonate de sodium et qui présente une distribution granulométrique telle qu'au moins 85 % en poids de ses particules aient un diamètre inférieur à 0,500 mm et qu'au maximum 25 % en poids de ses particules aient un diamètre inférieur à 0,040 mm. Conformément à une variante préférée de cette forme de réalisation de l'invention, la poudre mise en oeuvre au broyage présente une distribution granulométrique telle que, pour 100 unités pondérales de ses particules, 85 unités aient un diamètre inférieur à 0,250 mm, de 50 à 70 unités aient un diamètre inférieur à 0,125 mm, de 30 à 50 unités aient un diamètre inférieur à 0,090 mm et moins de 25 unités aient un diamètre inférieur à 0,045 mm.

Dans la forme de réalisation spécialement recommandée qui vient d'être décrite, les conditions du broyage constituent un paramètre important. En particulier, il est important de régler le broyage pour éviter une décomposition thermique inopportune ou excessive du bicarbonate de sodium de la poudre, sous l'effet de la chaleur dégagée par le broyage. Les paramètres optimum du broyage sont directement liés à d'autres paramètres, tels que le broyeur utilisé, la granulométrie de la poudre soumise au broyage et ses teneurs en bicarbonate et en monocarbonate de sodium, la distribution granulométrique recherchée pour la composition réactive selon l'invention ainsi ses teneurs en bicarbonate et en monocarbonate de sodium. En pratique, les paramètres optimum du broyage peuvent être déterminés aisément dans chaque cas particulier par un travail de routine au laboratoire.

Toutes autres choses égales, la composition réactive selon l'invention présente une efficacité optimum comme réactif d'épuration d'une fumée en chlorure d'hydrogène et, le cas échéant, en dioxyde de soufre. Cette efficacité se manifeste au niveau de l'excès de composition réactive nécessaire pour décomposer une fraction définie du chlorure d'hydrogène et du dioxyde de soufre du gaz, par rapport à la quantité stoechiométrique.

La composition réactive selon l'invention trouve une application intéressante pour l'épuration des fumées résiduaires de l'incinération des ordures ménagères.

L'invention concerne dès lors également un procédé pour l'épuration d'une fumée contenant du chlorure d'hydrogène, selon lequel on introduit, dans la fumée, à une température de 125 à 600 °C, une composition réactive conforme à l'invention, contenant du bicarbonate de sodium, et on soumet ensuite la fumée à un dépoussiérage.

Dans le procédé selon l'invention, la composition réactive est introduite à l'état solide dans la fumée. En général, la composition réactive est introduite dans un courant de la fumée, circulant à l'intérieur d'une chambre de réaction. Dans celle-ci, le bicarbonate de sodium décompose le chlorure d'hydrogène de la fumée en formant du chlorure de sodium. Le dépoussiérage de la fumée a pour fonction d'en extraire les particules de chlorure de sodium formées. Il peut être réalisé par tous moyens connus appropriés, par exemple par séparation mécanique dans un cyclone, par filtration à travers un tissu filtrant ou par séparation électrostatique. Dans la mise en oeuvre du procédé selon l'invention, il est nécessaire de prévoir un temps de réaction suffisant du bicarbonate de sodium avec le chlorure d'hydrogène de la fumée, avant de soumettre celle-ci au dépoussiérage. En pratique, il s'est révélé avantageux que le dépoussiérage soit opéré plus de 2 secondes (de préférence endéans un temps de 2,5 à 6 secondes) après la fin de l'introduction de la composition réactive dans la fumée.

Le procédé selon l'invention trouve une application spécialement avantageuse pour l'épuration d'une fumée provenant de l'incinération d'ordures ménagères. Dans cette application particulière du procédé selon l'invention, le produit solide recueilli du dépoussiérage comprend généralement, en plus du chlorure de sodium, du sulfate de sodium, des métaux polyvalents à l'état métallique ou combiné, ainsi que du carbonate de sodium. Ce produit solide peut être traité de la manière exposée dans la demande internationale de brevet WO 93/04983 [(SOLVAY (Société Anonyme)].

Des particularités et détails de l'invention vont ressortir de la description suivantes des dessins annexes.

La figure 1 montre schématiquement une installation d'incinération d'ordures ménagères mettant en oeuvre le procédé selon l'invention;
Les figures 2 et 3 sont deux diagrammes reproduisant les distributions granulométriques cumulatives de deux formes de réalisation particulières de la composition réactive selon l'invention.

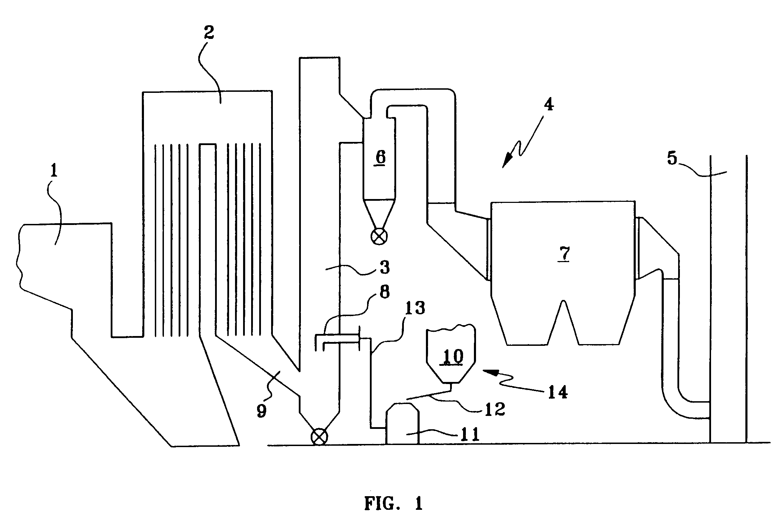

L'installation d'incinération représentée à la figure 1 comprend un four d'incinération 1 (partiellement représenté), une chaudière de récupération 2, une chambre de réaction tubulaire verticale 3, un dispositif de dépoussiérage 4 et une cheminée 5. Le dispositif de dépoussiérage 4 comprend un cyclone 6, suivi d'une batterie 7 de filtres électrostatiques. En variante, l'installation peut comprendre un filtre à tissus filtrants, par exemple un filtre à manches, en remplacement ou en aval de la batterie de filtres électrostatiques 7.

La chambre de réaction 2 est équipée d'un injecteur 8 relié à un dispositif d'alimentation 14 d'une composition réactive.

Pendant l'exploitation de l'installation de la figure 1, le four d'incinération 1 génère une fumée chargée de chlorure d'hydrogène, de dioxyde de soufre et de diverses impuretés gazeuses et solides, parmi lesquelles des métaux lourds. Cette fumée quitte le four 1, traverse la chaudière 2 dans laquelle on récupère une partie de sa chaleur sensible, puis débouche, via un carneau 9, dans la partie inférieure de la chambre de réaction 3, au-dessous de l'injecteur 8. L'injecteur 8 est par ailleurs alimenté avec une composition réactive pulvérulente conforme à l'invention, provenant du dispositif d'alimentation 14 dont le fonctionnement sera explicité plus bas. Ainsi, dans la chambre 3, la fumée est traitée avec la composition réactive provenant de l'injecteur 8, ce qui a pour résultat de décomposer le chlorure d'hydrogène et le dioxyde de soufre de la fumée, avec formation de particules de chlorure de sodium et de sulfate de sodium. A sa sortie de la chambre de réaction 3, la fumée passe dans le dispositif de dépoussiérage 4, où on sépare les matières solides qu'elle contient, en particulier les métaux lourds ainsi que le chlorure et le sulfate de sodium formés dans la chambre de réaction 3. La fumée épurée est ensuite transférée telle quelle à la cheminée 5.

La composition réactive utilisée pour alimenter l'injecteur 8 provient du dispositif d'alimentation 14. Celui-ci, comprend un silo 10 contenant une poudre de bicarbonate de sodium du commerce et un broyeur 11 alimenté au départ du silo 10 par l'intermédiaire d'un distributeur vibrant 12. Le broyeur 11 est du type à attrition, dans lequel l'énergie d'attrition est communiquée à la matière à broyer par un courant d'air (Kirk Othmer, Encyclopedia of Chemical Technology, Volume 21, 1983, page 157). Le broyeur comporte un organe de tamisage. Il est relié à l'injecteur 8 par un conduit 13.

Les exemples suivants servent à illustrer l'invention.

Exemple 1.

On a procédé à l'incinération d'ordures ménagères dans une installation industrielle du type de celle décrite plus haut, en référence à la figure 1. A sa sortie du four d'incinération, la fumée présentait les caractéristiques suivantes :

Composition pondérale (mg/$Nm^3$) :

HCl : 1300

$SO_2$ : 200

Température : 250 °C

Débit : 3500 $Nm^3$/h

On a par ailleurs mis en oeuvre une poudre de bicarbonate de sodium du commerce, présentant les caractéristiques suivantes :

| Composition pondérale : | |
|---|---|
| $NaHCO_3$ : > 99 % | |
| $Na_2CO_3$ : < 1 % | |
| Distribution granulométrique : | |
| Diamètre (mm) | Fraction pondérale (%) |
| < 0,250 | > 85 |
| < 0,125 | 50 - 70 |
| < 0,088 | 30 - 50 |
| < 0,044 | < 25 |

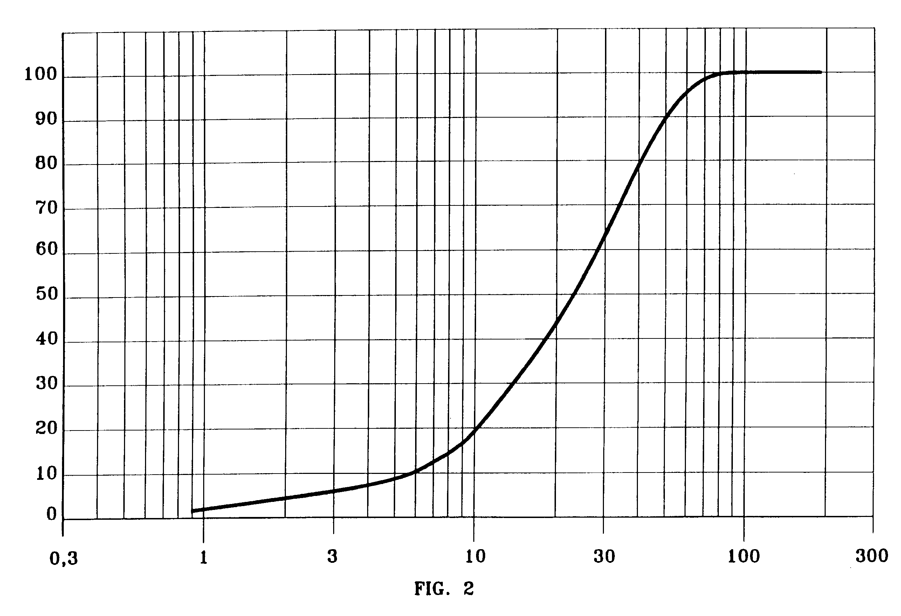

Cette poudre de bicarbonate de sodium du commerce a été broyée dans un broyeur à attrition RTM 300-S, fabriqué par STM s.n.c.. Le fonctionnement du broyeur a été réglé de manière à obtenir une composition réactive présentant la distribution granulométrique représentée à la figure 2 et la composition pondérale suivante :

$NaHCO_3$ :    > 99 %
$Na_2CO_3$ :    < 1 %

La figure 2 reproduit la distribution granulométrique cumulative de la composition réactive recueillie du broyeur. Sur cette figure, l'échelle des abscisses représente le diamètre des particules, exprimé en microns et l'échelle des ordonnées représente la fraction pondérale cumulée, exprimée en % du passe.

La composition réactive recueillie du broyage a été immédiatement injectée telle quelle dans la fumée, avec un débit correspondant sensiblement à 1,6 mole de $NaHCO_3$ par mole de (HCl+$SO_2$) de la fumée. La fumée traitée a ensuite été dépoussiérée sur un filtre électrostatique.

On a analysé la composition de la fumée après le traitement d'épuration et dépoussiérage :

HCl : 200 mg/Nm$^3$
SO$_2$ : 10 mg/Nm$^3$

Exemple 2.

On a répété l'essai de l'exemple 1, avec une fumée présentant les caractéristiques suivantes à la sortie du four d'incinération :

Composition pondérale (mg/Nm$^3$) :

HCl : 647

SO$_2$ : 100

Température : 167 °C

Débit : 36000 Nm$^3$/h

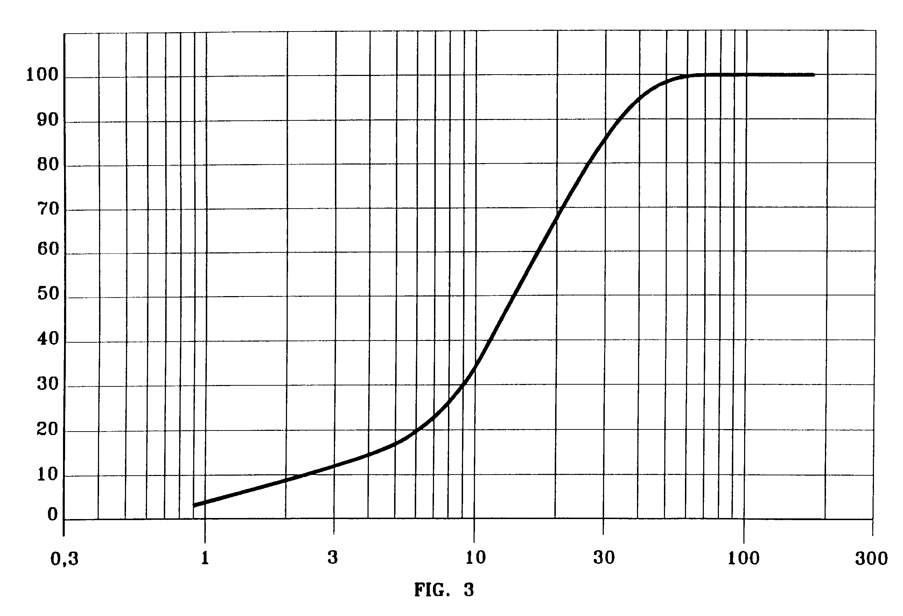

On a utilisé la même poudre de bicarbonate de sodium du commerce qu'à l'exemple 1. Les conditions du broyage de la poudre ont toutefois été modifiées de manière à obtenir une composition réactive présentant la distribution granulométrique cumulative représentée à la figure 3 (les échelles des abscisses et des ordonnées sont identiques à celles de la figure 2) et la composition pondérale suivante :

NaHCO$_3$ : > 99 %
Na$_2$CO$_3$ : < 1 %

La composition réactive recueillie du broyage a été immédiatement injectée telle quelle dans la fumée, avec un débit correspondant sensiblement à 1,2 mole de NaHCO$_3$ par mole de HCl+SO$_2$) de la fumée. La fumée traitée a ensuite été dépoussiérée sur un filtre à tissus filtrants.

On a analysé la composition de la fumée après le traitement d'épuration et dépoussiérage :

HCl : 5 mg/Nm$^3$
SO$_2$ : < 10 mg/Nm$^3$

**Revendications**

1. Composition réactive, solide, pulvérulente pour l'épuration d'un gaz contenant du chlorure d'hydrogène, ladite composition réactive comprenant au moins 99 % en poids de bicarbonate de sodium et au maximum 1 % en poids de monocarbonate de sodium et présentant une distribution granulométrique définie par un diamètre moyen de particule de 0,010 à 0,030 mm et une pente granulométrique de 1 à 3.

2. Composition réactive selon la revendication 1, caractérisée en ce que la teneur pondérale en bicarbonate de sodium est de 99 à 99,9 % et la teneur pondérale en monocarbonate de sodium est de 0,1 à 1 %.

3. Composition réactive selon la revendication 1 ou 2, caractérisée en ce que le diamètre moyen de particule est de 0,020 à 0,030 mm et la pente granulométrique est de 1,25 à 2,50.

4. Composition réactive selon la revendication 3, caractérisée en ce qu'elle est constituée de particules dont au moins 90 % en poids ont un diamètre égal ou inférieur à 0,055 mm et dont au maximum 10 % en poids ont un diamètre inférieur à 0,006 mm.

5. Composition réactive selon la revendication 3 ou 4, présentant la distribution granulométrique cumulative représentée à la figure 2.

6. Composition réactive selon la revendication 1 ou 2, caractérisée en ce que le diamètre moyen de particule est de 0,010 à 0,020 mm et la pente granulométrique est de 1 à 3.

7. Composition réactive selon la revendication 6, caractérisée en ce qu'elle est constituée de particules dont au moins 90 % en poids ont un diamètre égal ou inférieur à 0,035 mm et dont au maximum 10 % en poids ont un diamètre inférieur à 0,005 mm.

8. Composition réactive selon la revendication 6 ou 7, présentant la distribution granulométrique représentée à la figure 3.

9. Composition réactive selon l'une quelconque des revendications 1 à 8, obtenues par broyage d'une poudre qui comprend au moins 99 % en poids de bicarbonate de sodium et au maximum 1 % en poids de monocarbonate de sodium et qui présente une distribution granulométrique telle qu'au moins 85 % en poids de ses particules aient un diamètre inférieur à 0,500 mm et qu'au maximum 25 % en poids de ses particules aient un diamètre inférieur à 0,040 mm.

10. Composition réactive selon la revendication 9, caractérisée en ce que la poudre présente une distribution granulométrique telle que, pour 100 unités pondérales de particules, 85 unités aient un diamètre inférieur à 0,250 mm, de 50 à 70 unités aient un diamètre inférieur à 0,125 mm, de 30 à 50 unités aient un diamètre inférieur à 0,090 mm et moins de 25 unités aient un diamètre inférieur à 0,045 mm.

11. Utilisation d'une composition réactive selon l'une quelconque des revendications 1 à 10, pour l'épuration d'une fumée résiduaire de l'incinération d'ordures ménagères.

12. Procédé pour l'épuration d'une fumée contenant du chlorure d'hydrogène, selon lequel on introduit dans la fumée, à une température de 125 à 600 °C, une composition réactive conforme à l'une quelconque des revendications 1 à 11 et on soumet ensuite la fumée à un dépoussiérage.

13. Procédé selon la revendication 12, caractérisé en ce que le dépoussiérage comprend une séparation électrostatique et en ce que la composition réactive que l'on introduit dans la fumée est conforme à l'une quelconque des revendications 3 à 5.

14. Procédé selon la revendication 11, caractérisé en ce que le dépoussiérage comprend une filtration à travers un tissu filtrant et en ce que la composition réactive que l'on introduit dans la fumée est conforme à l'une quelconque des revendications 6 à 8.

15. Procédé selon l'une quelconque des revendications 12 à 14, caractérisé en ce que le dépoussiérage de la fumée est opéré plus de 2 secondes après la fin de l'introduction de la composition réactive dans la fumée.

16. Procédé selon la revendication 15, caractérisé en ce que le temps écoulé entre la fin de l'introduction de la composition réactive dans la fumée et le dépoussiérage est de 2,5 à 6 secondes.

**Claims**

1. Solid powdered reactive composition for the purification of a gas containing hydrogen chloride, the said reactive composition comprising at least 99% by weight of sodium bicarbonate and at most 1% by weight of sodium monocarbonate and exhibiting a particle size distribution defined by an average particle diameter of 0.010 to 0.030 mm and a particle size slope of 1 to 3.

2. Reactive composition according to Claim 1, characterized in that the sodium bicarbonate content by weight is from 99 to 99.9% and the sodium monocarbonate content by weight is from 0.1 to 1%.

3. Reactive composition according to Claim 1 or 2, characterized in that the average particle diameter is from 0.020 to 0.030 mm and the particle size slope is from 1.25 to 2.50.

4. Reactive composition according to Claim 3, characterized in that it is composed of particles of which at least 90% by weight have a diameter equal to or less than 0.055 mm and of which at most 10% by weight have a diameter of less than 0.006 mm.

5. Reactive composition according to Claim 3 or 4, exhibiting the cumulative particle size distribution represented in Figure 2.

6. Reactive composition according to Claim 1 or 2, characterized in that the average particle diameter is from 0.010 to 0.020 mm and the particle size slope is from 1 to 3.

7. Reactive composition according to Claim 6, characterized in that it is composed of particles of which at least 90% by weight have a diameter equal to or less than 0.035 mm and of which at most 10% by weight have a diameter of less than 0.005 mm.

8. Reactive composition according to Claim 6 or 7, exhibiting the particle size distribution represented in Figure 3.

9. Reactive composition according to any one of Claims 1 to 8, obtained by milling a powder which comprises at least 99% by weight of sodium bicarbonate and at most 1% by weight of sodium monocarbonate and which exhibits a particle size distribution such that at least 85% by weight of its particles have a diameter of less than 0.500 mm and such that at most 25% by weight of its particles have a diameter of less than 0.040 mm.

10. Reactive composition according to Claim 9, characterized in that the powder exhibits a particle size distribution such that, per 100 units by weight of particles, 85 units have a diameter of less than 0.250 mm, from 50 to 70 units have a diameter of less than 0.125 mm, from 30 to 50 units have a diameter of less than 0.090 mm and less than 25 units have a diameter of less than 0.045 mm.

11. Use of a reactive composition according to any one of Claims 1 to 10, for the purification of flue gas from the incineration of household waste.

12. Process for the purification of smoke containing hydrogen chloride, according to which a reactive composition in accordance with any one of Claims 1 to 11 is introduced into the smoke at a temperature of 125 to 600°C and the smoke is then subjected to dust removal.

13. Process according to Claim 12, characterized in that the dust removal comprises an electrostatic separation and in that the reactive composition which is introduced into the smoke is in accordance with any one of Claims 3 to 5.

14. Process according to Claim 11, characterized in that the dust removal comprises a filtration through a filter cloth and in that the reactive composition which is introduced into the smoke is in accordance with any one of Claims 6 to 8.

15. Process according to any one of Claims 12 to 14, characterized in that the removal of dust from the smoke is carried out more than 2 seconds after the end of introduction of the reactive composition into the smoke.

16. Process according to Claim 15, characterized in that the time elapsed between the end of introduction of the reactive composition into the smoke and the dust removal is from 2.5 to 6 seconds.

**Patentansprüche**

1. Reaktive, feste, pulverförmige Zusammensetzung zur Reinigung eines Chlorwasserstoff enthaltenden Gases, wobei besagte reaktive Zusammensetzung wenigstens 99 Gew.-% Natriumbicarbonat und höchstens 1 Gew.-% Natriummonocarbonat umfaßt und eine granulometrische Verteilung aufweist, die durch einen mittleren Teilchendurchmesser von 0,010 bis 0,030 mm und eine granulometrische Steilheit von 1 bis 3 definiert ist.

2. Reaktive Zusammensetzung gemäß Anspruch 1, dadurch gekennzeichnet, daß der Gewichtsgehalt an Natriumbicarbonat 99 bis 99,9% und der Gewichtsgehalt an Natriummonocarbonat 0,1 bis 1% beträgt.

3. Reaktive Zusammensetzung gemäß Anspruch 1 oder 2, dadurch gekennzeichnet, daß der mittlere Teilchendurchmesser 0,020 bis 0,030 mm und die granulometrische Steilheit 1,25 bis 2,50 beträgt.

4. Reaktive Zusammensetzung gemäß Anspruch 3, dadurch gekennzeichnet, daß sie aus Teilchen besteht, von denen wenigstens 90 Gew.-% einen Durchmesser gleich oder kleiner 0,055 mm haben und von denen höchstens 10 Gew.-% einen Durchmesser kleiner 0,006 mm haben.

5. Reaktive Zusammensetzung gemäß Anspruch 3 oder 4, die die in der Figur 2 dargestellte kumulative granulometrische Verteilung aufweist.

6. Reaktive Zusammensetzung gemäß Anspruch 1 oder 2, dadurch gekennzeichnet, daß der mittlere Teilchendurchmesser 0,010 bis 0,020 mm beträgt und die granulometrische Steilheit 1 bis 3 beträgt.

7. Reaktive Zusammensetzung gemäß Anspruch 6, dadurch gekennzeichnet, daß sie aus Teilchen besteht, von denen wenigstens 90 Gew.-% einen Durchmesser gleich oder kleiner 0,035 mm haben und von denen höchstens 10 Gew.-% einen Durchmesser kleiner 0,005 mm haben.

8. Reaktive Zusammensetzung gemäß Anspruch 6 oder 7, die die in Figur 3 dargestellte granulometrische Verteilung aufweist.

9. Reaktive Zusammensetzung gemäß einem der Ansprüche 1 bis 8, die durch Mahlen eines Pulvers erhalten wird, das wenigstens 99 Gew.-% Natriumbicarbonat und höchstens 1 Gew.-% Natriummonocarbonat umfaßt und das eine solche granulometrische Verteilung aufweist, daß wenigstens 85 Gew.-% seiner Teilchen einen Durchmesser kleiner 0,500 mm haben und daß höchstens 25 Gew.-% seiner Teilchen einen Durchmesser kleiner 0,040 mm haben.

10. Reaktive Zusammensetzung gemäß Anspruch 9, dadurch gekennzeichnet, daß das Pulver eine solche granulometrische Verteilung aufweist, daß pro 100 Gewichtseinheiten Teilchen 85 Einheiten einen Durchmesser kleiner 0,250 mm haben, 50 bis 70 Einheiten einen Durchmesser kleiner 0,125 mm haben, 30 bis 50 Einheiten einen Durchmesser kleiner 0,090 mm haben und weniger als 25 Einheiten einen Durchmesser kleiner 0,045 mm haben.

11. Verwendung einer reaktiven Zusammensetzung gemäß einem der Ansprüche 1 bis 10 zur Reinigung eines Restrauchgases aus der Verbrennung von Hausmüll.

12. Verfahren zur Reinigung eines Chlorwasserstoff enthaltenden Rauchgases, gemäß dem man in das Rauchgas bei einer Temperatur von 125 bis 600 °C eine reaktive Zusammensetzung gemäß einem der Ansprüche 1 bis 11 einführt und man das Rauchgas anschließend entstaubt.

13. Verfahren gemäß Anspruch 12, dadurch gekennzeichnet, daß das Entstauben eine elektrostatische Trennung umfaßt und dadurch, daß die reaktive Zusammensetzung, die man in das Rauchgas einführt, gemäß einem der Ansprüche 3 bis 5 ist.

14. Verfahren gemäß Anspruch 11, dadurch gekennzeichnet, daß das Entstauben ein Filtrieren durch ein Filtergewebe umfaßt und daß die reaktive Zusammensetzung, die man in das Rauchgas einführt, gemäß einem der Ansprüche 6 bis 8 ist.

15. Verfahren gemäß einem der Ansprüche 12 bis 14, dadurch gekennzeichnet, daß das Entstauben des Rauchgases mehr als 2 Sekunden nach dem Ende des Einführens der reaktiven Zusammensetzung in das Rauchgas durchgeführt wird.

16. Verfahren gemäß Anspruch 15, dadurch gekennzeichnet, daß die Zeit, die zwischen dem Ende des Einführens der reaktiven Zusammensetzung in das Rauchgas und dem Entstauben vergeht, 2,5 bis 6 Sekunden beträgt.

FIG. 1

FIG. 2

EP 0 740 577 B1

FIG. 3